(19) Europäisches Patentamt
European Patent Office
Office européen des brevets

(11) **EP 3 981 824 A1**

(12) **EUROPEAN PATENT APPLICATION**

(43) Date of publication:
**13.04.2022 Bulletin 2022/15**

(21) Application number: **20200272.1**

(22) Date of filing: **06.10.2020**

(51) International Patent Classification (IPC):
**C08J 3/20** (2006.01)          **C08K 3/22** (2006.01)
**C08K 3/26** (2006.01)          **C08K 5/00** (2006.01)
**C08K 5/136** (2006.01)          **C08K 5/526** (2006.01)

(52) Cooperative Patent Classification (CPC):
(C-Sets available)
**C08J 3/201; C08J 5/18; C08K 3/22; C08K 3/26;**
**C08K 5/005; C08K 5/136; C08K 5/526;**
C08J 2323/12; C08K 2003/2296; C08K 2201/005;
C08K 2201/006          (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Lummus Novolen Technology GmbH
68165 Mannheim (DE)**

(72) Inventors:
• **Wittner, Manfred
  68165 Mannheim (DE)**
• **Räntzsch, Volker
  76137 Karlsruhe (DE)**

(74) Representative: **Osha Liang
2, rue de la Paix
75002 Paris (FR)**

(54) **METHODS FOR MODIFYING THE OPTICAL APPEARANCE OF POLYMERS**

(57)     The disclosure relates to a method for modifying the optical appearance of a polymer, the method comprising extruding a molten polymer and a composition comprising acid scavengers consisting of zinc oxide and zinc carbonate.

FIG. 1

**(Cont. next page)**

(52) Cooperative Patent Classification (CPC): (Cont.)

C-Sets
**C08K 3/22, C08L 23/10;**
**C08K 3/22, C08L 23/12;**
**C08K 3/26, C08L 23/10;**
**C08K 3/26, C08L 23/12;**
**C08K 5/005, C08L 23/10;**
**C08K 5/136, C08L 23/12;**
**C08K 5/526, C08L 23/12**

**Description**

BACKGROUND OF INVENTION

Technical Field

The present disclosure relates to a method for modifying the optical appearance of polymers, such as, for example, polypropylene, as well as to the use of a composition for, among others, modifying the optical appearance of a polymer and/or for stabilizing the color of a polymer with time.

Background Art

Polymers, such as for example polypropylene produced with Ziegler-Natta catalysts, may have an unsatisfactory initial color at the production time and/or exhibit discoloration with time. Also, polypropylene, for example produced with Ziegler-Natta catalysts, may have an insufficient transparency and/or gloss. The poor optical appearance derived from one or more of these properties, upon processing and/or aging, is undesired in some applications, such as in extrusion applications, for example stretched tapes (e.g., raffia or slit tapes), biaxially oriented polypropylene (BOPP) films, and thermoformed articles. These applications are generally needed for food packaging, which not only are sensitive both to taste and odor which can be imparted by either the additive itself, or the reaction products of these additives with catalyst residues, but should also have a stable optical appearance.

Discoloration is a complex phenomenon which appears to depend on several factors, including the level of catalyst residues in the polymer. Discoloration appears to be exacerbated in particular when the catalyst residues are associated with other common additives such as antioxidants, which are used to protect the polymer from decomposition by reacting with radical species. Antioxidants may include organophosphites and organophosphonites, sterically hindered phenolic antioxidants and amines.

Further common additives may include acid scavengers, which are chemicals intended to neutralize acidic residues formed during the deactivation of, for example, Ziegler-Natta catalysts, for example in the production of polypropylene, thus contributing to the overall performance of the polymer. Acid scavengers for polypropylene include metallic stearates, such as sodium, calcium and zinc stearate, zeolitic structures, hydrotalcite, hydrocalumite, metallic oxides, such as calcium and zinc oxide, as well as other salts obtained from lactic acid and benzoic acid.

As described in Zweifel, Hans, Plastics Additives Handbook, 5th Edition, Carl Hanser Verlag, Munich 2001, pp. 492-493, in polyolefins, conventional zinc oxide produced by the so-called French process, which is based on a reaction of elemental zinc and oxygen, neutralizes acids and provides light stabilization. When compared to calcium stearate, zinc oxide is stated to neutralize more acid at the same weight concentration and to give better initial color than calcium stearate, but not to have the color-hold capability of calcium stearate, which is soluble in the polymer matrix. Accordingly, conventional zinc oxide is stated to be rarely used as an acid scavenger due to a poor color-hold stability upon multiple extrusion steps and to an excessive decrease of the transparency of the material. This is unacceptable, among others, in extrusion applications such as biaxially oriented polypropylene (BOPP) or cast film, stretched tape, or thermoforming. However, zinc oxides are used as acid scavengers in applications such as cast films, which are processed at high temperatures, at which organic metallic stearates tend to discolor in air.

In turn, the color-hold capability of calcium stearate is however not always satisfactory, at least not for all applications. Indeed, despite the transparency obtainable with calcium stearate, which is desired, for example, in film applications, as described in WO 2019/057640 A1, metal stearates are known to cause problems to polypropylene used in these applications because metal stearates are migratory additives which tend to migrate to the surface of a film. This may be particularly problematic if the film is metallized and/or printed. WO 2019/057640 A1 suggests using a combination of zinc oxide with the organophosphite antioxidant, which is said to result in a synergistic effect providing enhanced color stability to polypropylene. This is believed to depend on the fact that zinc oxide not only acts as an acid scavenger but also acts as an optical brightener, i.e., absorbs (near-) ultraviolet light and emits blue fluorescence, which contributes towards the improvement in initial color of polypropylene as well as the reduction in color formation during prolonged or repeated heat exposure.

As an alternative to metal stearates, it is known to use hydrotalcites, which are non-migratory and thus, do not affect the metallization or printability of a film. However, hydrotalcites when used in combination with phenolic antioxidants have poor color stability, in the sense that they can cause yellowing of the polymer to which they are added. Furthermore, hydrotalcites, which are frequently used for BOPP and stretched tapes, tend to form agglomerates, which may lead to unacceptable optical appearance after downstream processing, for example in BOPP films. Additionally, at high temperatures, hydrotalcites give off their crystal water.

Accordingly, the known methods for preparing polymer resins such as polyolefin-based resins and the attempts to improve the optical appearance thereof provide the use of additives which are still unsatisfactory, particularly, but not exclusively, for extrusion applications, where there is still a need to identify additives capable of giving the desired balance between different properties such as initial color, color-hold stability, i.e., color upon multiple extrusion steps, transparency, and gloss, while not impairing the performance of the polymer.

Therefore, there is still the need of developing methods for modifying the optical appearance of polymers which are capable of giving satisfactory initial color, color-hold stability, transparency, and gloss, while maintaining the performance of the polymer.

SUMMARY OF INVENTION

The Applicant has surprisingly found that by using a composition comprising zinc oxide and zinc carbonate as exclusive acid scavengers, and by contacting a polymer with this composition under extrusion conditions, an unexpected balance of initial color, color-hold capability, transparency and gloss is obtained, both in the presence and in the absence of antioxidants, while acidic residues are neutralized, thus ensuring that the overall performance of the polymer is attained. In the presence of one or more antioxidants, a synergistic effect between the zinc oxide and the zinc carbonate on the one side and the antioxidant(s) on the other side has been observed.

Indeed, the inventors tested compositions as defined in methods in accordance with one or more embodiments of the present disclosure, and found that the polymers treated with such compositions showed a transparency and a gloss at least comparable, if not better, to the transparency and gloss obtainable with calcium stearate. However, differently from metal stearates, transparency was not accompanied by the undesired migration of additives to the surface of a film and the related consequences of which metal stearates generally suffer. Indeed, also the color-hold capability was attained by these compositions. Additionally, it was surprisingly found that the polymers treated with these compositions as defined in embodiments of the method of the present disclosure were better, both in terms of initial color and in terms of color exhibited after several extrusion steps, than the corresponding polymers treated with the individual components of the composition.

According to a first aspect thereof, the present disclosure relates to a method for modifying the optical appearance of a polymer, the method comprising extruding a molten polymer and a composition comprising, for example consisting of, zinc oxide and zinc carbonate.

In the present description and the following claims, the optical appearance of the polymer is intended to indicate one or more of the following properties:

- initial color or color formation after compounding and extrusion of the polymer as determined by the yellowness index (YI) of the polymer pellets according to ASTM D6290;
- color-hold stability or color formation after compounding and a predetermined number of extrusion steps of the polymer, such as at least three, as determined by the yellowness index (YI) of the polymer pellets according to ASTM D6290;
- gloss as determined on injection molded polymer products according to ISO 2813; and/or
- haze as determined on injection molded polymer products according to ISO 14782.

Accordingly, a modification of the optical appearance of a polymer is used to indicate a modification of one or more of the above-mentioned properties, while a stabilization of the color of a polymer with time is synonymous to color-hold stability or color formation after a predetermined number of extrusion steps, such as for example three.

According to one or more embodiments, the polymer may comprise a polypropylene. The polypropylene may be selected, for example, from homopolymers and copolymers of propylene, for example including copolymers of propylene with other olefins, wherein the olefin has for example from two to eight carbon atoms.

According to one or more embodiments, the polypropylene may be selected from the group comprising polypropylene homopolymers, random copolymers comprising propylene, heterophasic copolymers comprising propylene and combinations thereof. For example, the polypropylene may be selected from the group consisting of polypropylene homopolymers and propylene copolymers of propylene and ethylene.

According to one or more embodiments, the polypropylene may comprise homopolymers, random copolymers and heterophasic copolymers of propylene. Copolymers of propylene may comprise copolymers of propylene with other olefins such as ethylene, 1-butene, 2-butene and pentene isomers, and combinations thereof. Random copolymers, also known as statistical copolymers, are polymers in which the propylene and the comonomer(s) are randomly distributed throughout the polymeric chain in ratios corresponding to the feed ratio of the propylene to the comonomer(s). Heterophasic copolymers are made up of a semicrystalline matrix comprising propylene homopolymer or random copolymer and of rubber particles consisting of, for example, random copolymer of propylene and ethylene. Homopolymers, random copolymers and heterophasic copolymers may be manufactured by any known process.

For example, the polymer may be a propylene homopolymer or copolymer. According to one or more embodiments, the propylene homopolymer or copolymer, before the extrusion, may have an initial MFR, measured according to ISO 1133 with a load of 2.16 kg at 230°C, of about 0.2 g/10 min to about 200 g/10 min, for example from 1 g/10 min to 100 g/10 min, for example from 1.5 g/10 min to 50 g/10 min, for example from 2 g/10 min to 20 g/10 min, for example from 2.5 g/10 min to 10 g/10 min.

In the present description and claims, if not otherwise indicated, the MFR is a MFR measured according to ISO 1133 with a load of 2.16 kg at 230°C.

According to one or more embodiments, the propylene homopolymer or copolymer, after the extrusion in the presence of the composition, may have a final MFR of from 0.2 g/10 min to 200 g/10 min. According to one or more embodiments, the final MFR may be of from 1 g/10 min to 100 g/10 min, for example of from 1.5 g/10 min to 50 g/10 min, for example of from 2 g/10 min to 20 g/10 min, for example of from 2.5 g/10 min to 10 g/10 min..

According to one or more embodiments, the composition comprises, for example consists of, zinc oxide and zinc carbonate and, optionally, one or more polymer additives, for example any polymer additive other than additives acting as acid scavengers.

According to one or more embodiments, the zinc oxide and the zinc carbonate are present in the same particle. In these embodiments, the composition is not a mixture of particles of zinc oxide and particles of zinc carbonate, but rather a composition each particle of which comprises both zinc oxide and zinc carbonate.

According to one or more embodiments, when the composition comprises zinc oxide and zinc carbonate, the composition may comprise, in addition to these compounds, also basic zinc carbonate.

According to one or more embodiments, the zinc carbonate of the composition comprising zinc oxide and zinc carbonate may comprise basic zinc carbonate.

According to one or more embodiments, the composition may be prepared by a wet-chemical precipitation process.

According to one or more embodiments, the composition has a BET surface area from 10 $m^2/g$ to 100 $m^2/g$, for example from 20 $m^2/g$ to 90 $m^2/g$, for example from 30 $m^2/g$ to 60 $m^2/g$, for example from 40 to $m^2/g$ 50 $m^2/g$.

According to one or more embodiments, the composition has a bulk density in the range of 50 g/l to 400 g/l, for example from 100 g/l to 300 g/l, for example from 150 g/l to 250 g/l.

According to one or more embodiments, the composition comprises 90% to 99% by weight of zinc oxide, for example from 93% to 98% by weight of zinc oxide, for example from 94% to 97.5% by weight of zinc oxide, for example from 95% to 97% by weight of zinc oxide, and 1% to 10% by weight of zinc carbonate, for example 2% to 7% by weight of zinc carbonate, for example 2.5% to 6% by weight of zinc carbonate, for example 3% to 5% by weight of zinc carbonate.

According to one or more embodiments, the composition comprises from 0.1 wt% to 1.0 wt% carbon, for example from 0.2 wt% to 0.6 wt% carbon, for example from 0.3 wt% to 0.5 wt% carbon, with respect to the total weight of the composition.

According to one or more embodiments, the composition comprises zinc oxide and zinc carbonate and is prepared by a wet-chemical precipitation process.

According to one or more embodiments, when the composition is prepared by a wet-chemical precipitation process, the composition may be prepared in a spray drier at a predetermined gas temperature, such as for example described in document DE 3 900 243. For example, the process may comprise, as described in this document, mixing an aqueous solution of at least one alkali carbonate, alkali metal hydroxide or mixtures thereof and a zinc salt solution, zinc carbonate or basic zinc carbonate aqueous to precipitate zinc carbonate or basic zinc carbonate. The resulting aqueous suspension may be dried in a hot gas. The temperature of the hot gas in the spray dryer may be in the range from 450° C to 900°C.

According to one or more embodiments, the composition may have a particle size distribution as determined by at least one of the following average diameters.

According to one or more embodiments, the composition has a $D_{10}$, which corresponds to the average diameter such that 10% of the volume of the particles in the composition has a diameter of less than $d_{10}$, measured by a Malvern Mastersizer 2000® at room temperature and 3.0 bar air pressure, from 0.2 $\mu$m to 3.0 $\mu$m, for example from 0.5 $\mu$m to 2.0 $\mu$m, for example from 0.7 $\mu$m to 1.8 $\mu$m.

According to one or more embodiments, the composition has a $D_{50}$, which corresponds to the average diameter such that 50% of the volume of the of the particles in the composition has a diameter of less than $d_{50}$, measured by a Malvern Mastersizer 2000® at room temperature and 3.0 bar air pressure, from 2.0 $\mu$m to 15 $\mu$m, for example from 3.0 $\mu$m to 13 $\mu$m, for example from 3.5 $\mu$m to 12.5 $\mu$m.

According to one or more embodiments, the composition has a $D_{90}$, which corresponds to the average diameter such that 90% of the volume of the of the particles in the composition has a diameter of less than $d_{90}$, measured by a Malvern Mastersizer 2000® at room temperature and 3.0 bar air pressure, from 5.0 $\mu$m to 30 $\mu$m, for example from 8.0 $\mu$m to 28 $\mu$m, for example from 10 $\mu$m to 25 $\mu$m.

According to one or more embodiments, the composition further comprises at least one antioxidant. When the composition comprises at least one antioxidant, the zinc oxide and the zinc carbonate act synergistically with the at least one antioxidants, leading to an unexpected combination of good initial color (low yellowness index), high color-hold stability upon multiple extrusion steps, high transparency (low haze), and high gloss. Furthermore, when the composition comprises at least one antioxidant, improved heat stabilization as characterized by an increase in oxidation induction time (OIT) according to ISO 11357-6 may be attained, which is beneficial for pipe applications such as hot and cold potable water and pressure pipes, floor and wall heating systems, and fittings.

According to one or more embodiments, the at least one antioxidant is selected from the group comprising, for examples consisting of, phenolic antioxidants, amine antioxidants, hydroxylamine antioxidants, phosphite antioxidants, phosphonite antioxidants, benzofuranone antioxidants, thiodipropionate antioxidants, acryloyl antioxidants and combinations thereof.

For example, the phenolic antioxidants may comprise one or more sterically hindered phenolic compounds. Exemplary compounds may be selected from the group comprising pentaerythritol tetrakis(3-(3,5-di-tert-butyl-4-hydroxyphenyl)propionate), 1,3,5-trimethyl-2,4,6-tris(3,5-di-tert-butyl-4-hydroxybenzyl)benzene, and 1,3,5-tris(3,5-di-tert-butyl-4-hydroxybenzyl)-1,3,5-triazine-2,4,6(1H,3H,5H)-trione. For example, the amine antioxidants may comprise hindered amine compounds. Exemplary compounds may be selected from the group comprising poly(4-hydroxy-2,2,6,6-tetramethyl-1-piperidine ethanol-alt-1,4-butanedioic acid), bis(2,2,6,6-tetramethyl-4-piperidyl) sebacate, poly[[6-[(1,1,3,3-tetramethylbutyl)amino]-s-triazine-2,4-diyl]-[(2,2,6,6-tetramethyl-4-piperidyl)imino]-hexamethylene-[(2,2,6,6-tetramethyl-4-piperidyl)imino]. For example, the hydroxylamine antioxidants may comprise oxidized bis(hydrogenated tallow alkyl) amines. An exemplary compound may be bis(octadecyl)hydroxylamine. For example, the phosphite antioxidants may comprise phosphite esters. Exemplary compounds may be selected from the group comprising tris(2,4-di-tert-butylphenyl)phosphite, 3,9-bis(2,4-dicumylphenoxy)-2,4,8,10-tetraoxa-3,9-diphosphaspiro[5.5]undecane, and bis(2,6-di-ter-butyl-4-methylphenyl) pentaerythritol- diphosphite. For example, the phosphonite antioxidants may comprise phosphonite esters. An exemplary compound may be tetrakis(2,4-di-tert-butylphenyl)[1,1'-biphenyl]-4,4'-diylbis(phosphonite). For example, the benzofuranone antioxidants may comprise 3-aryl-benzofuranones. An exemplary compound may be 5,7-di-tert-butyl-3-(3,4-dimethylphenyl)3H-benzofuran-2-one. For example, the thiodipropionate antioxidants may comprise thiodipropionic acid alkyl esters. An exemplary compound may be 3,3'-thiodipropionic acid dioctadecylester. For example, the acryloyl antioxidants may comprise acryloyl modified phenols. An exemplary compound may be 2-(1,1-dimethylethyl)-6-[[3-(1,1-dimethylethyl)-2-hydroxy-5-methylphenylymethyl-4-methylphenyl acrylate.

According to one or more embodiments, the at least one antioxidant comprises at least one primary antioxidant, suitable for long-term stabilization, and at least one secondary antioxidant, suitable for process stabilization, or combinations thereof. For example, primary antioxidants may comprise phenolic antioxidants, amine antioxidants, and hydroxylamine antioxidants. For example, secondary antioxidants may comprise phosphite antioxidants and phosphonite antioxidants.

According to one or more embodiments, the composition comprises from 5 wt% to 40 wt% of zinc oxide, from 0.5 wt% to 4.0 wt% of zinc carbonate and from 10 wt% to 65 wt% of at least one antioxidant, which may be any of the above-mentioned exemplary primary and/or secondary antioxidants, each amount being provided with respect to the total weight of the composition.

According to one or more embodiments, the composition comprises:

from 5 wt% to 40 wt%, for example from 10 wt% to 35 wt%, for example from 15 wt% to 30 wt% of zinc oxide,

from 0.5 wt% to 4.0 wt%, for example from 1.0 wt% to 3.5 wt%, for example from 1.5 wt% to 3.0 wt% of zinc carbonate,

from 10 wt% to 65 wt%, for example from 15 wt% to 60 wt%, for example from 20 wt% to 55 wt% of at least one primary antioxidant or at least one secondary antioxidant or combinations thereof,

each amount being provided with respect to the total weight of the composition.

According to one or more embodiments, the composition comprises:

from 5 wt% to 40 wt%, for example from 10 wt% to 35 wt%, for example from 15 wt% to 30 wt% of zinc oxide,

from 0.5 wt% to 4.0 wt%, for example from 1.0 wt% to 3.5 wt%, for example from 1.5 wt% to 3.0 wt% of zinc carbonate,

from 10 wt% to 65 wt%, for example from 15 wt% to 60 wt%, for example from 20 wt% to 55 wt% of at least one primary antioxidant, and

from 10 wt% to 65 wt%, for example from 15 wt% to 60 wt%, for example from 20 wt% to 55wt% of at least one secondary antioxidant,

each amount being provided with respect to the total weight of the composition.

According to one or more embodiments, the primary antioxidant may be selected from the group consisting of sterically hindered phenolic compounds, hindered amine compounds, hydroxylamine compounds, and the secondary antioxidant may be selected from the group consisting of phosphite compounds and phosphonite compounds.

According to one or more embodiments, the composition comprises zinc oxide, zinc carbonate and optionally one or more antioxidants, but no further acid scavengers, i.e., no acid scavengers other than the zinc oxide and zinc carbonate of the composition. For example, the composition may comprise no further metallic salts, such as sodium, calcium, zinc or similar acid metal salts. For example, the composition may comprise no zinc stearate or other metal stearates.

According to one or more embodiments, the method further comprises adding the composition to the polymer so that the amount of the composition added to the polymer ranges from 1000 ppm to 5000 ppm, for example from 1200 ppm to 3000 ppm, for example from 1500 ppm to 2500 ppm, with respect to the amount of the polymer.

Unless otherwise indicated, throughout the present disclosure and the following claims, ppm indicates mg/kg, and is thus ppm wt.

When the composition added to the polymer comprises one or more antioxidants, in addition to zinc oxide and zinc carbonate, the composition added to the polymer ranges from 1000 ppm to 5000 ppm, for example from 1200 ppm to 3000 ppm, for example from 1500 ppm to 2500 ppm, with respect to the amount of the polymer.

According to one or more embodiments, the method comprises a plurality of extrusion steps, such as two, three, four or more extrusion steps.

According to one or more embodiments, a first extrusion step may comprise extruding the molten polymer and the composition comprising zinc oxide and zinc carbonate, and each of the subsequent extrusion steps may comprise extruding the material obtained by the first extrusion step.

Independently from the number of extrusion steps, according to one or more embodiments, the method may comprise a step of compounding the composition and the polymer, before the step of extruding.

According to one or more embodiments, extruding may be performed in an extruder or in any other melt processing device. In both cases, extruding is performed under extrusion conditions.

According to one or more embodiments, extruding may be performed in an extruder at predetermined extrusion conditions suitable for extruding a polymer, such as for example at a predetermined extrusion temperature and at a predetermined extrusion pressure. With reference to an extruder, unless otherwise indicated, in the present description and in the following claims the exemplary extrusion temperatures and pressures are intended to indicate the barrel temperatures and pressures.

For example, extruding may be performed at an extrusion temperature of from 180°C to 270°C, for example from 190°C to 260°C, for example from 200°C to 250°C.

For example, extruding may be performed at an extrusion pressure of from 1 bar to 200 bar, for example from 5 bar to 150 bar, for example depending on the zone of the extruder or melt processing device.

According to one or more embodiments, the extruder may comprise, in the order, a feed zone, a solid conveying zone, a solid compression zone, a melting zone, a melt conveying zone, a decompression zone, a melt compression zone and a die zone. The feed zone feeds the polymer powder into the extruder and may be kept at a predetermined temperature to avoid that the polymer powder becomes sticky or melts and to ensure that the peroxide does not start reacting. The solid conveying zone transports the polymer powder towards the compression zone. The solid compression zone pressurizes the polymer powder, while most of the polymer is melted in the melting zone, and the melt conveying zone melts the last polymer particles and mixes to a uniform temperature and composition. The decompression zone allows the molten polymer to be decompressed. The melt compression zone pressurizes the polymer melt, and the die zone forms the molten polymer into the desired shape for collection.

According to one or more embodiments, the extrusion pressure may vary along the length of the extruder. For example, the extrusion conditions may comprise a feed zone pressure of 1 bar (atmospheric pressure) and a melt compression zone of from 5 bar to 150 bar. The remaining zones may have pressures intermediate to the exemplary pressures of the feed zone and of the melt compression zone.

The extrusion conditions may further comprise an intensive mixing in the extruder. According to one or more embodiments, sufficient mixing may be obtained by setting the screw speed of the extruder within the range of from 50 rpm to 200 rpm.

According to one or more embodiments, extruding may be performed in the presence of one or more polymer additives, for example any polymer additive other than acid scavengers. Exemplary additives may comprise, for example, fillers, antioxidants, fungicides, bactericides, reinforcing agents, antistatic agents, heat stabilizers, UV-stabilizers, flow enhancers, colorants and other additives or processing aids known to those skilled in the art.

According to one or more embodiments, the composition may be added to the polymer before the extrusion. According to one or more embodiments, the composition may be added to the polymer during the extrusion.

According to one or more embodiments, the method comprises extruding a molten polymer in the presence of a composition as described in one or more of the embodiments of the method herein described.

According to a second aspect thereof, the present disclosure relates to a polymeric composition obtained by the method of any of the embodiments described in this description, in any combination thereof.

According to a further aspect thereof, the present disclosure relates to the use of a composition comprising zinc oxide and zinc carbonate for modifying the optical appearance of a polymer. A composition as defined in any of the embodiments of the method may be used.

According to one or more embodiments, the use is for modifying the optical appearance of a polymer under extrusion conditions.

According to one or more embodiments, the extrusion conditions may be as defined above with reference to embodiments of the method.

According to one or more embodiments, modifying the optical appearance of a polymer may be selected from the group comprising, for example consisting of, suppressing color, maintaining or stabilizing color with time and/or with the number of extrusion steps, reducing haze (i.e., increasing transparency), increasing gloss and combinations thereof.

For example, this modification of the optical appearance may comprise one or more of the following:

initial yellowness index lower than 5, for example lower than 2,

yellowness index lower than 40, for example lower than 25, upon three extrusion steps,

haze lower than 60%, for example lower than 45%, and/or

gloss at 20° higher than 80, for example higher than 85, and/or gloss at 60° higher than 90, for example higher than 100.

According to one or more embodiments, the method and the uses as defined in any of the embodiments described herein may be performed for film, stretched tape, and sheet applications.

Exemplary film applications comprise biaxially oriented polypropylene (BOPP) films, cast films, tubular water quenched films, blown films. Exemplary stretched tape applications comprise raffia, slit tapes, straps, decorative ribbons. Exemplary sheet applications comprise thermoforming, solid phase pressure forming, melt forming.

For example, in each of the above-mentioned uses, which may performed also in combination, the composition may be used in an extruder under one or more of the extrusion conditions defined above with reference to the method. The composition and the polymer may be any of the exemplary compositions and polymers described above.

BRIEF DESCRIPTION OF DRAWINGS

Figure 1 illustrates the yellowness index of a polymer composition obtained by a method according to one embodiment disclosed herein compared to comparative examples.

Figure 2 illustrates the gloss of an article comprising a polymer composition obtained by a method according to one embodiment disclosed herein compared to comparative examples.

Figure 3 illustrates the haze of an article comprising a polymer composition obtained by a method according to one embodiment disclosed herein compared to comparative examples.

In each figure, error bars are shown indicating empirical standard deviations.

DESCRIPTION OF EMBODIMENTS

The following examples of methods for modifying the optical appearance of polymers, such as, for example, polypropylene, are given for illustrating but not limiting purposes.

The examples show properties of polymers obtained by performing methods for modifying the optical appearance of polymers according to embodiments of the present disclosure. In particular, the examples show the improved optical appearance obtained by the methods according to embodiments of the present disclosure compared to three conventional methods using conventional calcium stearate, conventional zinc oxide and conventional zinc carbonate, respectively. Indeed, the examples of methods according to embodiments of the present disclosure show lower yellowness index both after compounding and upon several extrusion steps of the polymer as determined according to ASTM D6290, higher gloss as determined according to ISO 2813 and lower haze as determined according to ISO 14782 with respect to polymers treated in accordance with conventional methods.

In the following examples, a method for modifying the optical appearance of isotactic polypropylene homopolymer under extrusion conditions will be described. However, different polymers may be treated by the method of the present disclosure. Also, compositions will be described comprising zinc oxide, zinc carbonate and two antioxidants. However, different antioxidants and further common additives may be used in accordance with one or more embodiments of the method of the present disclosure. By way of example, also stabilizers and/or additional additives may be used in accordance with one or more embodiments of the method of the present disclosure.

Each exemplary composition was fed with an exemplary polymer powder through a hopper directly into an extruder. Together with the composition and the polymer powder, any stabilizers and/or additional additives may be also fed through the hopper into the extruder. The exemplary polymer and compositions were extruded in a Brabender lab twin-screw extruder KEDSE 20 / 40 D with an L/D (extruder Length/screw Diameter) of 40, at an extrusion temperature of 230°C, at a screw speed of 120 rpm, and at an extrusion pressure of 10 bar. The polymer and the composition were mixed by the screw of the extruder.

The following methods were used to determine the properties reported in the examples.

Melt Flow Rate (MFR) was measured according to ISO 1133 with a load of 2.16 kg at 230 °C.

The carbon content was determined by detecting the release of carbon dioxide upon treatment of the respective powders with phosphoric acid (25% v/v), washing / drying the released gas with sulfuric acid / potassium permanganate / silver nitrate / silver wool in consecutive wash and dry towers, and by using a nondispersive infrared sensor (NDIR). The employed carrier gas was nitrogen and the powder samples were encapsulated in gelatin prior to measurements.

The theoretical zinc carbonate content was estimated by assuming that all carbon stemmed from zinc carbonate (theoretical zinc carbonate content = carbon content $\times$ molar mass of zinc carbonate / molar mass of carbon).

The BET surface areas were determined using a Micromeritics ASAP 2420 instrument at the pressure range $p/p_0$ from 0.06 to 0.2 by acquiring five points and performing a linear regression according to Brunauer-Emmett-Teller (BET) theory (Micromeritics Operator's Manual, Brunauer, S.; Emmett, P.H.; and Teller, E., J. Am. Chem. Soc. 60, 309 (1938)). The analysis adsorptive was nitrogen gas, the analysis bath temperature was 77.350 K, the ambient temperature was 22.00°C, automatic degassing was turned on, thermal correction was turned off and the equilibration interval was 10 s.

For each point designated for surface area calculations, the quantity of adsorbed gas Q was measured, and $f(Q,p_0/p)$ was calculated:

$$f(Q, p_0/p) = \frac{1}{Q \times (p_0/p - 1)}$$

where $f(Q,p_0/p)$ is in the units of g/cm$^3$ STP and $Q$ is in the units of cm$^3$/g STP.

A least square-fit was performed on the $(p/p_0, f(Q, p_0/p))$ designated pairs where $p/po$ was the independent variable and $f(Q, p_0/p)$ was the dependent variable. The following were determined:

a) Slope $S$ in g/cm$^3$ STP,
b) Y-intercept $Y_{INT}$ g/cm$^3$ STP,

Using the results of the above calculations, the BET surface areas $SA_{BET}$ were calculated:

$$SA_{BET} = \frac{CSA \times (6.023 \times 10^{23})}{(22414 \text{ cm}^3 \text{ STP}) \times (10^{18} \text{ nm}^2/\text{m}^2) \times (S + Y_{INT})}$$

where CSA = 0.1620 nm$^2$ (molecular cross-sectional area (nm$^2$) of nitrogen).

The particle size distributions were determined using a Malvern Mastersizer 3000 with a Malvern Aero S dry dispersion unit. The pressure of the dispersing unit (Venturi) was set to 3.0 bar, and the dosing system was adjusted to achieve an obscuration value of 0.5-10%. The experimental diffraction data was analyzed according to Fraunhofer theory as described in ISO 13320. Particle size distribution percentiles $D_{10}$ (equivalent to x10), $D_{50}$ (equivalent to x50), $D_{90}$ (equivalent to x90) were calculated according to ISO 9276.

Color formation after compounding and extrusion of pellets of the polymer was determined by the yellowness index (YI) of the polymer pellets. To determine the yellowness index, a color determination according to ASTM D6290 with a Group I Spectrophotometer, the LabScan XE from Hunterlab, in the range of 400 - 700 nm, with a resolution of 10 nm, and with a D65/10° arrangement of Illuminant/Observer was performed. A sample cup was filled to the top with pellets, placed on the sensor port and covered with an opaque and light excluding cover. The measurement delivered the Tristimulus values X, Y and Z. The calculation of the yellowness index was done according to ASTM E313 by the following equation: $YI = 100 (Cx\ X - Cz\ Z) / Y$ , where the coefficients Cx and Cz were selected according to the setting of Illuminant and Observer used for the measurement of the Tristimulus values. For Illuminant D65 and Observer 10°, Cx is 1.3013 and Cz is 1.1498.

Haze measurements were performed on a BYK Haze-gard plus according to ISO 14782.

Gloss measurements were performed on a BYK micro-TRI-gloss at angles of 20° and 60° according to ISO 2813.

For haze and gloss measurements, injection molded plaques having a thickness of 1 mm were prepared according to ISO 294, and were measured directly upon preparation.

Comparative Examples 1-3 and Example 4 according to the disclosure

Different polymers were prepared by compounding isotactic polypropylene homopolymer powder (MFR 12 g/10 min, ISO 1133) with different compositions including respective additives acting as acid scavengers as well as additives acting as antioxidants. The isotactic polypropylene homopolymer was prepared by a vertically stirred gas-phase polymerization process using a Ziegler-Natta-catalyst. The compositions are identified in Table 1.

**Table 1**

| Example | Polymer matrix | Composition |
|---|---|---|
| Comparative Example 1 | Isotactic polypropylene homopolymer | Calcium stearate (500 ppm), Phosphite-168 (500 ppm), Phenolic AO-1010 (1000 ppm) |
| Comparative Example 2 | Isotactic polypropylene homopolymer | Zinc oxide (500 ppm), Phosphite-168 (500 ppm), Phenolic AO-1010 (1000 ppm) |
| Comparative Example 3 | Isotactic polypropylene homopolymer | Zinc carbonate (500 ppm), Phosphite-168 (500 ppm), Phenolic AO-1010 (1000 ppm) |
| Example 4 according to the disclosure | Isotactic polypropylene homopolymer | Composition of zinc oxide and zinc carbonate (500 ppm), Phosphite-168 (500 ppm), Phenolic AO-1010 (1000 ppm) |

The components used were the following commercially available products:

Phosphite-168: tris(2,4-di-tert-butylphenyl) phosphite (Irgafos 168® commercially available from BASF)

Phenolic AO-1010: pentaerythritol tetrakis(3-(3,5-di-tert-butyl-4-hydroxyphenyl)propionate) (Irganox 1010® commercially available from BASF)

Calcium stearate: Ligastar CA350® commercially available from Peter Greven

Zinc carbonate: Zinc Carbonate RAC® commercially available from Brüggemann,

Zinc oxide: White Seal S® commercially available from Brüggemann,

Composition of zinc oxide and zinc carbonate: Zinc Oxide AC 45® commercially available from Brüggemann.

Prior to compounding, the components of each composition were tumble mixed with the polymer powder for 2 h to ensure good dispersion thereof. The mixture of polypropylene powder and composition of each example was fed in the hopper of the extruder at a feed rate of 3 kg/h. The obtained extrudates were pelletized (MFR of 13 g/10 min to 14 g/10 min of the final pellet) and subsequently subjected to all further tests including multiple extrusion steps, yellowness, gloss, and haze measurements.

Carbon content, (theoretical) zinc carbonate content, BET surface area, and particle size distribution parameters of representative batches of the zinc-based components are summarized in Table 2.

**Table 2**

| Parameter | Zinc oxide | Zinc carbonate | Composition of zinc oxide and zinc carbonate |
|---|---|---|---|
| Carbon content [wt%] | 0.0 | 3.0 | 0.5 |
| (theoretical) zinc carbonate content [wt%] | 0.1 | 31.4 | 4.7 |
| BET Surface area [$m^2$/g] | 6.1 | 135.0 | 49.6 |
| $D_{10}$ [$\mu$m] | 0.4 | 1.3 | 0.8 |
| $D_{50}$ [$\mu$m] | 6.2 | 24.1 | 3.7 |
| $D_{90}$ [$\mu$m] | 28.1 | 65.4 | 11.2 |

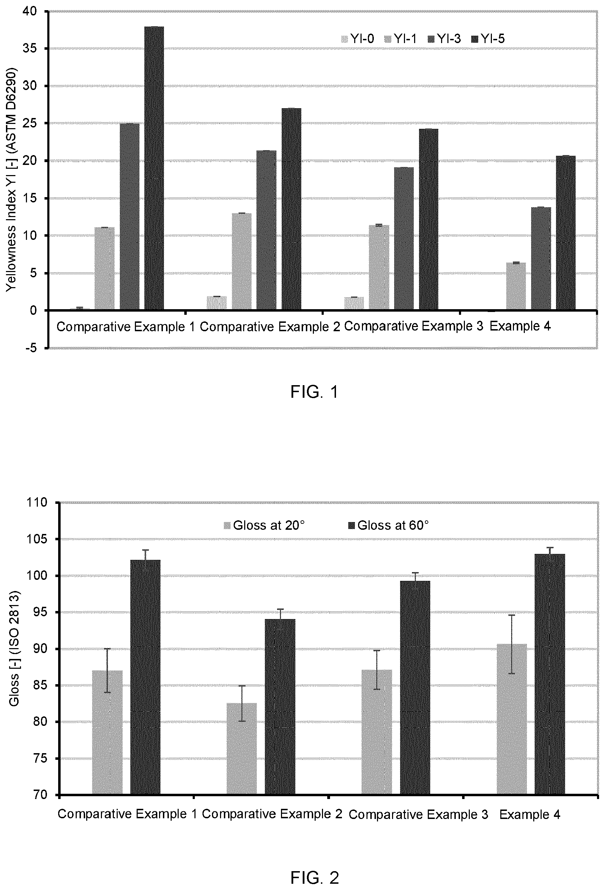

In Figure 1 and Table 3, results of yellowness index measurements on the polymeric compositions of Comparative Examples 1-3 and Example 4 upon initial compounding (Y-0) and the corresponding increase of the yellowness index upon further extrusion steps (YI-1 to YI-5) are shown.

**Table 3**

| Example | YI-0 [-] | YI-1 [-] | YI-3 [-] | YI-5 [-] |
|---|---|---|---|---|
| Comparative Example 1 | 0.3 | 11.1 | 24.9 | 37.9 |
| Comparative Example 2 | 1.9 | 13.0 | 21.3 | 27.0 |
| Comparative Example 3 | 1.8 | 11.4 | 19.1 | 24.2 |
| Example 4 according to the disclosure | -0.1 | 6.4 | 13.8 | 20.6 |

The composition of Example 4 shows the lowest initial yellowness index after compounding (Y-0) and the lowest increase in the yellowness index upon one, three and five extrusion steps. For example, YI-5 of Example 4 is 45% lower than YI-5 of Comparative Example 1, and 24% lower than YI-5 of Comparative Example 2. Hence, Example 4 shows the best initial color and color-hold stability of all tested compositions.

In Figure 2 and Table 4, results of gloss and haze measurements on the polymeric compositions of Comparative Examples 1-3 and Example 4 are shown.

**Table 4**

| Example | Gloss at 20° [-] | Gloss at 60° [-] | Haze [%] |
|---|---|---|---|
| Comparative Example 1 | 87.0 | 102.1 | 41.3 |
| Comparative Example 2 | 82.5 | 94.0 | 56.1 |
| Comparative Example 3 | 87.1 | 99.3 | 45.0 |
| Example 4 according to the disclosure | 90.6 | 102.9 | 41.1 |

As shown, the use of the composition of Example 4 led to significantly higher gloss values compared to both Comparative Example 2 and Comparative Example 3. Accordingly, the composition of Example 4 has an optical appearance and properties which are particularly suitable for manufacturing articles such as slit tapes or BOPP films.

Furthermore, the composition of Example 4 showed gloss values comparable to the gloss values obtained with calcium stearate, but without phenomena of surface migration. Accordingly, the composition of Example 4 is particularly suitable for printability and raffia applications.

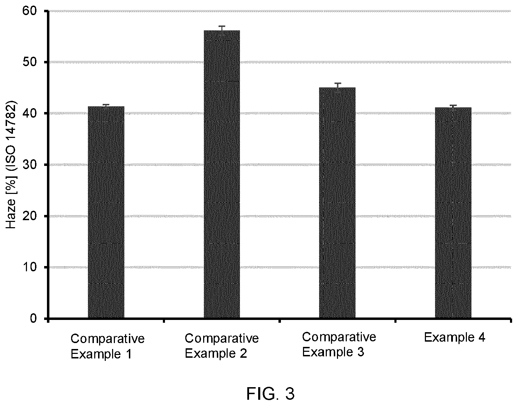

The results of haze measurements on the polymeric compositions of Comparative Examples 1-3 and Example 4 are also shown in Figure 3. As shown, the use of the composition of Example 4 led to improved properties also in terms of haze value, which was 25% lower than the value obtained in the case of Comparative Example 2. Accordingly, the composition of Example 4 is particularly suitable for high transparency applications, such as thermoformed articles.

With reference to the high gloss and low haze values of Example 4, these results were particularly unexpected. Indeed, enhancing both these properties is surprising, among others, because the composition of Example 4 contains inorganic additives which are insoluble in the polymer matrix.

The results of the modification of the optical appearance of polypropylene show an improved optical appearance with respect to each of the conventional methods using conventional calcium stearate, conventional zinc oxide and conventional zinc carbonate, respectively, in terms of yellowness index after compounding and upon several extrusion steps, gloss and haze.

While the different aspects of the present disclosure have been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

**Claims**

1. A method for modifying the optical appearance of a polymer, the method comprising extruding a molten polymer and a composition comprising:
acid scavengers consisting of zinc oxide and zinc carbonate.

2. The method of claim 1, wherein the zinc oxide and the zinc carbonate are present in the same particle.

3. The method of claim 1 or claim 2, wherein the composition has a BET surface area from 10 $m^2$/g to 100 $m^2$/g.

4. The method of any of claims 1-3, wherein the composition comprises 90% to 99% by weight of zinc oxide, and 1% to 10% by weight of zinc carbonate.

5. The method of any of claims 1-4, wherein the composition comprises from 0.1 wt% to 1.0 wt% carbon with respect to the total weight of the composition.

6. The method of any of claims 1-5, wherein the composition further comprises at least one antioxidant.

7. The method of any of claims 1-6, wherein the at least one antioxidant is selected from the group comprising phenolic antioxidants, phosphite antioxidants, amine antioxidants, hydroxylamine antioxidants, phosphonite antioxidants, benzofuranone antioxidants, thiodipropionate antioxidants, acryloyl antioxidants and combinations thereof.

8. The method of any of claims 1-7, the method further comprising adding the composition to the polymer so that the amount of the composition added to the polymer ranges from 1000 ppm to 5000 ppm with respect to the amount of the polymer.

9. The method of any of claims 1-8, the method comprising a plurality of extrusion steps.

10. The method of any of claims 1-9, wherein the polymer comprises a polypropylene.

11. The method of claim 10, wherein the polypropylene is selected from the group comprising polypropylene homopolymers, random copolymers comprising propylene, heterophasic copolymers comprising propylene and combinations thereof.

12. A polymeric composition obtained by the method of any of claims 1-11.

13. Use of a composition comprising zinc oxide and zinc carbonate for modifying the optical appearance of a polymer.

14. Use of claim 13, wherein modifying the optical appearance of a polymer comprises suppressing color, maintaining or stabilizing color with time and/or with the number of extrusion steps, reducing haze, increasing gloss and combinations thereof.

15. Use of claim 14, wherein modifying the optical appearance comprises at least one of:

a yellowness index lower than 40 upon three extrusion steps of a polymer having an initial yellowness index lower than 5,
a haze lower than 60%, and
a gloss at 20° higher than 80 and/or gloss at 60° higher than 90.

FIG. 1

FIG. 2

FIG. 3

Europäisches
Patentamt

European
Patent Office

Office européen
des brevets

## EUROPEAN SEARCH REPORT

Application Number

EP 20 20 0272

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE CA [Online] CHEMICAL ABSTRACTS SERVICE, COLUMBUS, OHIO, US; 28 April 2020 (2020-04-28), LI, ZHIHUI ET AL: "Exterior extrusion forming molded natural shrinkage texture plastic plate, and molding method thereof", XP002802272, retrieved from STN Database accession no. 2020:779804 * abstract * -& CN 111 073 113 A (ZHONGFANG TEXTILE & APPAREL TESTING FUJIAN CO LTD) 28 April 2020 (2020-04-28) * abstract; claims 1,5,8 * * paragraphs [0057] - [0064] * ----- | 1-15 | INV. C08J3/20 C08K3/22 C08K3/26 C08K5/00 C08K5/136 C08K5/526 |
| X | US 2015/237866 A1 (GOUDSWAARD ALEXANDER VAN [NL] ET AL) 27 August 2015 (2015-08-27) * abstract; claims 6,11; table 1 * ----- | 1-15 | |
| X | DATABASE CA [Online] CHEMICAL ABSTRACTS SERVICE, COLUMBUS, OHIO, US; 25 April 2000 (2000-04-25), TAJIMA, HIROSHI: "Thermoplastic elastomer compositions and pipe joints using them with good moldability and ozone resistance", XP002802273, retrieved from STN Database accession no. 2000:266345 * abstract * -& JP 2000 119536 A (SUMITOMO RUBBER IND) 25 April 2000 (2000-04-25) * examples 10,11 * ----- -/-- | 1-15 | TECHNICAL FIELDS SEARCHED (IPC) C08J C08K |

The present search report has been drawn up for all claims

| Place of search | Date of completion of the search | Examiner |
|---|---|---|
| Munich | 12 March 2021 | Schütte, Maya |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 1 of 2

Europäisches
Patentamt

European
Patent Office

Office européen
des brevets

# EUROPEAN SEARCH REPORT

Application Number

EP 20 20 0272

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE CA [Online] CHEMICAL ABSTRACTS SERVICE, COLUMBUS, OHIO, US; 7 November 2017 (2017-11-07), CHEN, GANG ET AL: "Perforated electron irradiation crosslinked polyolefin foam material and preparation method thereof", XP002802274, retrieved from STN Database accession no. 2017:1761028 * abstract * -& CN 107 325 368 A (TAISHAN SPORTS IND GROUP; SHANDONG TAISHAN SPORTS EQUIPMENT CO LTD) 7 November 2017 (2017-11-07) ----- | 1-15 | |
| X | DATABASE CA [Online] CHEMICAL ABSTRACTS SERVICE, COLUMBUS, OHIO, US; 16 November 2018 (2018-11-16), DUAN, JIANPING ET AL: "Antibacterial crosslinked polyolefin foam material and preparation method thereof", XP002802275, retrieved from STN Database accession no. 2018:2197080 * abstract * -& CN 108 822 378 A (HUBEI XIANGYUAN NEW MATERIAL TECH INC) 16 November 2018 (2018-11-16) * claims 1,3,5 * ----- | 1-15 | TECHNICAL FIELDS SEARCHED (IPC) |
| X,D | DE 39 00 243 A1 (BRUEGGEMANN L KG [DE]) 12 July 1990 (1990-07-12) * abstract; claim 18; example 5 * ----- | 1-15 | |

The present search report has been drawn up for all claims

| Place of search | Date of completion of the search | Examiner |
|---|---|---|
| Munich | 12 March 2021 | Schütte, Maya |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 20 0272

This annex lists the patent family members relating to the patent documents cited in the above-mentioned European search report.
The members are as contained in the European Patent Office EDP file on
The European Patent Office is in no way liable for these particulars which are merely given for the purpose of information.

12-03-2021

| Patent document cited in search report | | Publication date | Patent family member(s) | | Publication date |
|---|---|---|---|---|---|
| CN 111073113 | A | 28-04-2020 | NONE | | |
| US 2015237866 | A1 | 27-08-2015 | NONE | | |
| JP 2000119536 | A | 25-04-2000 | JP 3465814 B2 | | 10-11-2003 |
| | | | JP 2000119536 A | | 25-04-2000 |
| CN 107325368 | A | 07-11-2017 | NONE | | |
| CN 108822378 | A | 16-11-2018 | NONE | | |
| DE 3900243 | A1 | 12-07-1990 | BE 1003259 A4 | | 11-02-1992 |
| | | | DE 3900243 A1 | | 12-07-1990 |
| | | | FR 2641268 A1 | | 06-07-1990 |
| | | | NL 9000021 A | | 01-08-1990 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019057640 A1

- DE 3900243

**Non-patent literature cited in the description**

- **ZWEIFEL, HANS.** Plastics Additives Handbook. Carl Hanser Verlag, 2001, 492-493
- **BRUNAUER, S. ; EMMETT, P.H.** Micromeritics Operator's Manual

- **TELLER, E.** *J. Am. Chem. Soc.,* 1938, vol. 60, 309